Europäisches Patentamt

European Patent Office

Office européen des brevets

(19)

(11) **EP 1 710 462 A1**

(12) **EUROPEAN PATENT APPLICATION**

(43) Date of publication:
**11.10.2006 Bulletin 2006/41**

(51) Int Cl.:
*F16D 48/00* (2006.01)

(21) Application number: **05102762.1**

(22) Date of filing: **08.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Scania CV AB (publ)
151 87 Södertälje (SE)**

(72) Inventors:
• **Pettersson, Henrik**
  **151 48 Södertälje (SE)**
• **Järgenstedt, Mats**
  **151 46 Södertälje (SE)**

(54) **Clutch slip protection**

(57)     The invention relates to a system and a method for clutch slip protection in a vehicle driven by a motor (1), wherein the vehicle includes an output adjustment means (9) arranged to adjust the output power of the motor (1). According to the invention, if the occurrence of clutch slip is detected, the present engine torque is reduced in order to obtain cessation of said clutch slip; a value corresponding to the energy loss in the clutch caused by said clutch slip is calculated; and the reduced engine torque is maintained during a cool down period, wherein the length of said cool down period is based on said value corresponding to the energy loss. The invention further relates to a computer program (24) for an electronic control unit (25), a computer program product comprising computer readable medium (21) and the computer program (24), and an electronic control unit (25) of a vehicle comprising storage means (21) comprising the computer program (24).

Fig. 2

EP 1 710 462 A1

**Description**

**Technical field**

The invention generally relates to motor vehicles and, in particular, to a method and arrangement for clutch slip protection for a motor vehicle. The invention further relates to a computer program product comprising instructions for bringing a computer to cause steps of such a method, a computer program for executing the clutch slip protection, and an electronic control unit for such a system.

**Background art**

Normally, motor vehicles are equipped with a mechanical friction-gearshift clutch, e.g. of disc type, arranged between motor and a mechanical speed-change gear. When starting the vehicle or when changing the speeds of the speed-change gear, the driver disengages and engages the clutch.

One of the most important parameters of the clutch is its temperature. The capability of the clutch of transferring torque decreases with an increasing temperature. A major cause to temperature increase is clutch slip, i.e. the clutch linings of the incoming shaft and the outgoing shaft rotates with different speeds. The temperature increase is caused by the energy loss due to friction in the clutch.

However, this clutch slip not only entails an increased temperature in the clutch but also gives rise to excessive clutch wear, which, in turn, causes a not negligible extra cost to the vehicle owner, not only in terms of direct costs of clutch replacement and repairs but also because of consequent indirect costs of vehicle standstill.

Therefore, a number of solutions dealing with this problem have been proposed. US 6 033 342 discloses an arrangement for slip control where the engine torque is reduced during a predetermined period of time including a time interval beyond the end of the slip state has elapsed. This arrangement includes a position sensor arranged at the clutch to detect the engagement position of the clutch, which output is used at determination of clutch slip together with output signals from a speed sensor for detecting engine speed of the engine and a transmission speed sensor detecting the input speed of the speed change gear. In an alternative embodiment, the transmission speed sensor is changed to a gear position sensor detecting the current gear position of the speed-change gear.

However, the arrangement disclosed in US 6 033 342 is impaired with a number of drawbacks. For example, it requires further sensors along the driveline which are undesirable because of complicating the system. Another drawback is that they are not usually used in many heavy vehicles of today. Accordingly, in order to install this known system an instalment of a number of sensors are also required in many cases. The reliability of the system may also be negatively affected by an increased number of sensors due to the fact that the number of potential error sources increases at a corresponding extent. Moreover, the engine torque is reduced during a predetermined period of time. Thus, the period of time of reduced engine torque may be too short, i.e. the clutch is not allowed to cool down sufficiently, or may be too long, i.e. the vehicle is driven by means of a unnecessary low engine torque.

Furthermore, WO 01772546 A1 "Method and apparatus for indication of clutch slip" discloses a solution where released energy in the clutch, when slipping, is calculated by means of signals from an engine speed sensor and a sensor for the outgoing shaft of the gearbox. These signals are used together with stored values of actual gear ratios of the gear box to determine the present gear ratio and the occurrence of clutch slip. At detection of clutch slip the driver is notified and can thereby reduce the engine torque manually.

Since, according to the method and apparatus disclosed in WO 01772546 A1, the driver determines the period of time for the reduced engine torque, this period of time will probably vary in an arbitrary way. Hence, the period of time of reduced engine torque may be too short, i.e. the clutch is not allowed to cool down sufficiently, or may be too long, i.e. the vehicle is driven by means of a unnecessary low engine torque.

Thus, there is need of an improved method and a system for clutch slip protection in vehicles where the problems with the state of the art can be substantially eliminated.

Disclosure of the invention

It is an object of the invention to provide an improved method and a system for clutch slip in vehicles where the problems with the state of the art can be substantially eliminated.

It is another object with the invention to provide a method and a system for clutch slip protection applicable in a substantially broad range of vehicles.

It yet another object with the invention to provide a method and a system for clutch slip protection that can be used with manually operated gearboxes as well as automated gearboxes.

These and other objects are achieved according to the invention by providing a method, a system, a computer program product, an electronic control unit, and a computer program having the features defined in the independent claims. Preferred embodiments are defined in the dependent claims.

According to first aspect of the invention, there is provided a method for clutch slip protection in a vehicle driven by motor, the clutch being arranged in a torque transmission path of the motor between the motor and a gear box, wherein the vehicle further includes an output adjustment means arranged to adjust the output power of the motor. The method comprises the steps of: detecting the occurrence of clutch slip of the clutch; if the occurrence of clutch slip is detected, reducing the present engine torque to obtain cessation of the clutch slip; calculating a value corresponding to the energy loss in the clutch caused by the clutch slip; and maintaining the reduced engine torque during a cool down period, wherein the length of the cool down period is based on the value corresponding to the energy loss, thereby allowing the linings of the clutch to cool down.

According to a second aspect of the invention, there is provided a system for clutch slip protection in a vehicle driven by a motor, the clutch being arranged in a torque transmission path of the motor between the motor and a gear box, wherein the vehicle further includes an output adjustment means arranged to adjust the output power of the motor. The system comprises clutch slip protection means including processing means arranged to: detect the occurrence of clutch slip of the clutch; if the occurrence of clutch slip is detected, reduce the present engine torque to obtain cessation of the clutch slip; calculate a value corresponding to the energy loss in the clutch caused by the clutch slip; determine a cool down period based on the energy loss in the clutch caused by the clutch slip; send a control instruction to the output adjustment means to reduce the present engine torque to obtain cessation of the clutch slip and to maintain the reduced engine torque during a cool down period, wherein the length of the cool down period is based on the value corresponding to the energy loss.

According to third aspect of the invention, there is provided a computer program for an electronic control unit of a vehicle. The program comprises program instructions, which when run on the electronic control unit, brings the electronic control unit to cause steps of the method according to the first aspect.

According to fourth aspect of the invention, there is provided a computer program product comprising computer readable medium product and a computer program according to the third aspect, wherein the computer program is stored on the computer readable medium.

According to a further aspect of the invention, there is provided an electronic control unit of a vehicle. The control unit comprises a storage means comprising a computer program according to the third aspect.

The invention is based on the idea of using a variable cool down period with reduced torque, where the length of the cool down period is based on the energy loss, i.e. temperature increase, in the clutch caused by the clutch slip, thereby allowing the clutch linings to cool down sufficiently. The invention can accordingly be used with the sensors present along the driveline and do not require any additional sensors.

In one embodiment of the invention, the duration of the clutch slip is measured and the value corresponding the energy loss is calculated on basis of the duration. Thereby, the reliability of the calculation of the value corresponding to the energy loss can be improved. This, in turn, entails that the length of the cool down period of the clutch is adjusted to the actual temperature rise of the linings of the clutch in a more accurate way.

According to another embodiment of the invention, values corresponding to the engine speed to the propeller shaft speed is obtained substantially during the duration. The difference between the value corresponding to the engine speed and the value corresponding to the propeller shaft speed is calculated substantially continuously during said duration, the difference over the duration is summed and the value corresponding to the energy loss is determined or calculated on basis of the summation. Thus, the reliability of the calculation of the value corresponding to the energy loss can be further improved and the length of the cool down period of the clutch can be adjusted to the actual temperature rise of the linings of the clutch in a more accurate way.

In yet another embodiment of the invention, the value corresponding to the energy loss is calculated according to

$$E = \int_{t_{start}}^{t_{stop}} M\left(n_{engine} - n_{gearbox}\right) dt \quad ,$$

where E is the value corresponding to the energy loss, $t_{start}$ is the time point where the clutch slip was detected, $t_{stop}$ is the time point where the clutch slip ceased, M is a value corresponding to the engine torque, $n_{engine}$ is the value corresponding to the engine speed, and $n_{gearbox}$ is the value corresponding to the propeller shaft speed. Accordingly, a high reliability of the calculation of the value corresponding to the energy loss can be achieved.

In one embodiment of the invention, the gear ratio value of gear box is estimated; and the occurrence of clutch slip of the gear box is estimated utilizing the estimated gear ratio value. When estimating a gear ratio the present relationship between the value corresponding to the engine speed and the value corresponding to the propeller shaft speed is substantially continuously calculated and compared to a selected gear ratio value. Thereby, clutch slip can be identified by using signals or information present, i.e. sensors, in the drive train of the vehicle. This is possible since the occurrence of clutch slip is established by estimating a gear ratio value of the gear box. The invention discloses advantages in comparison to the solution disclosed in US 6 033 342, where further sensors along the driveline are required, for example, a gear position sensor detecting the current gear position of the speed-change gear. This is undesirable because it complicates the system.

Another advantage is that the invention can be implemented in a vehicle substantially without any major modifications of the present control units of the vehicle, which is required when installing the known system since, for example, a gear position sensor detecting the current gear position of the speed-change gear have to be installed.

As realized by the person skilled in the art, the method of the invention, as well as embodiments thereof, is suitable to realize or implement as a computer program or a computer program product.

Further objects and advantages of the invention will be discussed below by means of exemplifying embodiments.

Brief description of the drawings

Embodiments of the invention will now be described in greater detail with reference to the accompanying drawings, in which:

Fig. 1 shows a schematic block representation of the drive train arrangement for a motor vehicle according to the invention.

Fig. 2 shows a schematic block representation of the drive train arrangement for a motor vehicle according to an embodiment according to the invention.

Fig. 3 shows the general principles of the method for clutch slip protection in a vehicle according to the invention.

Fig. 4 shows an embodiment of the method according to the invention for clutch slip protection.

Mode(s) for carrying out the invention

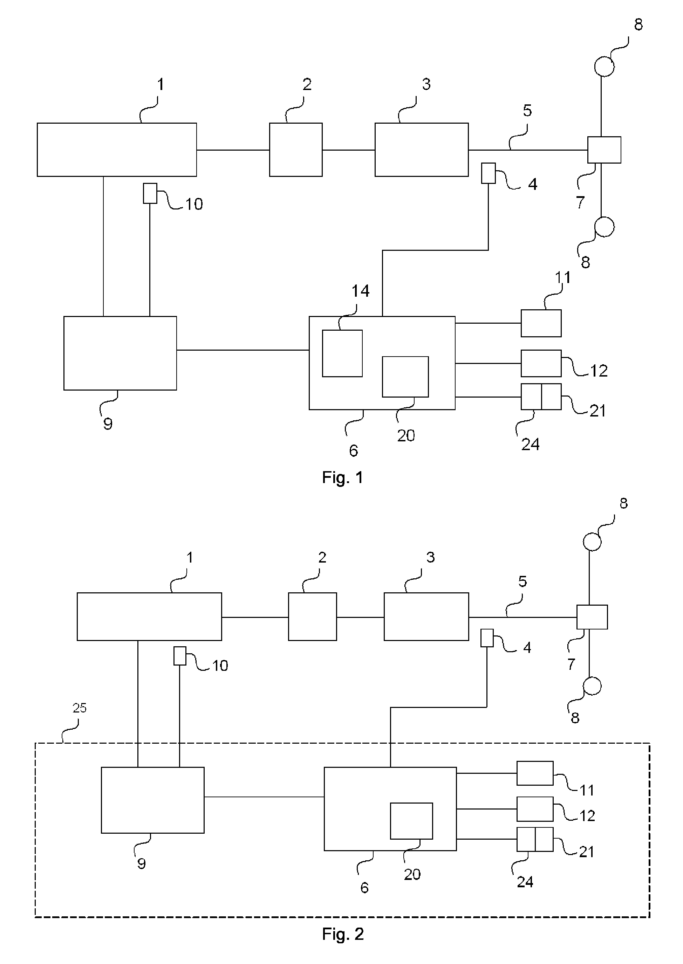

With reference first to Fig. 1, q drive train arrangement for a motor vehicle according to an embodiment of the invention will be described. A motor, e.g. an internal combustion engine, is denoted by reference numeral 1, a clutch by 2, manually or automatically operated, and a gearbox by 3. As the skilled man realizes, the invention can also be used with, for example, an electric motor. A speed sensor (detector) 4 arranged to detect the speed of a shaft arranged at the output side of the gearbox 3, for example, the propeller shaft 5 or the output shaft of the gearbox, is connected to a clutch slip protection means 6. The slip protection means 6 communicates with engine output adjustment means in the form of an engine control unit 9, which is adapted to control the operation of the motor 1. Furthermore, the clutch slip protection means 6 is adapted to detect the occurrence of clutch slip and to instruct the engine control system 9 to control the torque of the engine 1 to obtain a cessation of the clutch slip. This will be described in further detail below. Signals from the speed sensor 4 are converted in the protection means 6 to values representing the output shaft's instantaneous angular speed. The gearbox output shaft is connected to a final gear 7 which, in turn, is connected to the wheels 8 of the vehicle.

An engine speed sensor 10 is arranged to detect the speed of the engine or motor. Signals from the engine speed sensor 10 are converted in the engine control system 9 to instantaneous values thereof. These instantaneous values of the engine speed are communicated with the slip protection means 6 together with signals indicating the engine torque, which in one embodiment is based on the fuel quantity injected. The obtained values corresponding to the engine speed and the propeller shaft speed are stored in a storing means, in one embodiment, an intermediate memory 11 connected to the slip protection means 6. A second storing means or memory 12 connected to the slip protection means 6 is provided with gear ratio values for the various possible gear combinations in the vehicle's gearbox.

The slip protection means 6 comprises a processor 20 to which a third storing means 21, in addition to the first and second storing means 11 and 12, is connected. In this embodiment, first and third storing means 12 and 21 or computer readable medium comprises a random access memory (RAM) (not shown) in addition to various non-volatile memories such as read-only memory (ROM) (not shown) and keep-alive memory (KAM) (not shown). In this embodiment, the read-only third memory comprises a computer program 24 comprising instructions for bringing a computer to cause method steps in accordance with the invention. Computer readable medium 21 communicates with processor 20 via a standard control/address bus (not shown). As will be appreciated by one of ordinary skill in the art, computer readable storage media may comprise various types of physical devices for temporary and/or persistent storage of data which comprises solid state, magnetic, optical and combination devices. For example, the computer readable storage media may be implemented using one or more physical devices such as a hard-drive, DRAM, PROMS, EPROMS, EEPROMS, flash memory, and the like. Depending upon the particular application, the computer readable storage media may also comprise floppy disks, CD ROM, and the like.

Furthermore, the clutch slip protection means 6 includes measuring means 14 arranged to measure the duration of a detected clutch slip. To elaborate, when the clutch slip protection means 6 detects a clutch slip, the measuring means 14 initiates a time measuring sequence in order to measure the length of the time period of the clutch slip. When the clutch slip protection means 6 detects that the clutch slip has ceased, the time measuring sequence is interrupted and the duration of the clutch slip is stored in a storing means, which, in one embodiment, is an intermediate memory 11 connected to the slip protection means 6.

According to another embodiment, the slip protection means 6 and the engine control system 9 are incorporated within the content of an electronic control unit 25, as shown in Fig. 2.

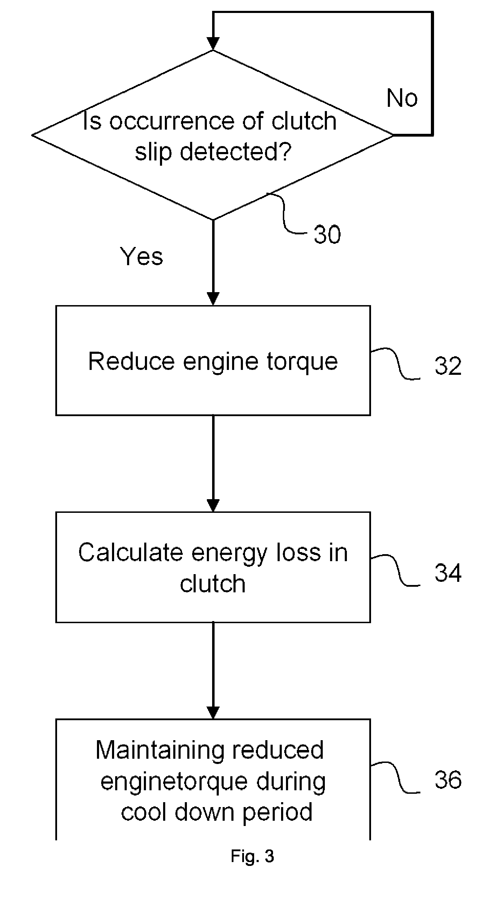

The general principles of the method for clutch slip protection in a vehicle according to the invention will now be described with reference to Fig. 3. First, at step 30, the occurrence of clutch slip is continuously detected. If a clutch slip is detected, the algorithm proceeds to step 32, where the present engine torque is reduced to obtain cessation of the clutch slip. That is, the processing means 20 is arranged to, at establishment of the occurrence of clutch slip, send a control instruction to the engine control system 9 instructing it to control the present engine torque to obtain cessation of the clutch slip. Thereafter, in step 34, a value corresponding to the energy loss in the clutch caused by the clutch slip is calculated. At the establishment of clutch slip, the measuring means 14 initiates a time measuring sequence in order to measure the length of the clutch slip period, i.e. the duration of the clutch slip. This duration is stored in storing means 11 for later use when calculating a value corresponding to the energy loss in the clutch caused by the clutch slip. Furthermore, values corresponding to the engine speed and the propeller shaft speed are obtained substantially continuously during the duration of the clutch slip by the clutch slip protection means 6 via the engine speed sensor 10 and the output shaft speed sensor 4 and the values representing the obtained speeds in each sensing moment are stored, for example, in storing means 11. The difference between the values corresponding to the engine speed and the propeller shaft speed during the duration is also calculated in each moment and stored. Alternatively, the calculation of the difference in each sensing moment can be performed when the clutch slip has ceased. A value corresponding to the engine torque is also obtained substantially continuously during the duration of the clutch slip by the clutch slip protection means 6 via the engine control system 9 and the values representing the engine torque at each sensing moment are stored, for example, in storing means 11.

When the clutch slip has stopped, the measuring means 14 stops the time measuring sequence, and the length of the time period the clutch slip lasted is stored in storing means 11. Thereafter, at step 54, a value corresponding to the energy loss is calculated in order to determine the period of time the further reduction of the engine torque should be maintained. Consequently, the length of the cool down period is based on the energy loss in the clutch or, in other words, the temperature rise caused by the clutch slip. In order to allow the clutch to cool down sufficiently, the length of the cool down period should be proportional to the energy loss, i.e. the higher the temperature rise is the longer the cool down period should be. In one embodiment, the value corresponding to the energy loss is calculated in accordance with

$$E = \int_{t_{start}}^{t_{stop}} M \left( n_{engine} - n_{gearbox} \right) dt$$

where E is the value corresponding to the energy loss, $t_{start}$ is the time point where the clutch slip was detected, $t_{stop}$ is the time point where the clutch slip ceased, M is the value corresponding to the engine torque, $n_{engine}$ is the value corresponding to the engine speed, and $n_{gearbox}$ is the value corresponding to the propeller shaft speed. The length of the cool down period is a function of the energy loss, E, in the clutch. Studies have shown that an energy loss of approximately 5 kW in the clutch requires a cool down period of about 5 seconds, i.e. the clutch linings require a period of about 5 seconds with reduced engine torque to cool down appropriately.

At step 36, the reduced engine torque is maintained during a cool down period, wherein the length of the cool down period is based on the value corresponding to the energy loss calculated, for example, by means of equation 1. Finally, the engine torque can be increased, for example, to the initial level.

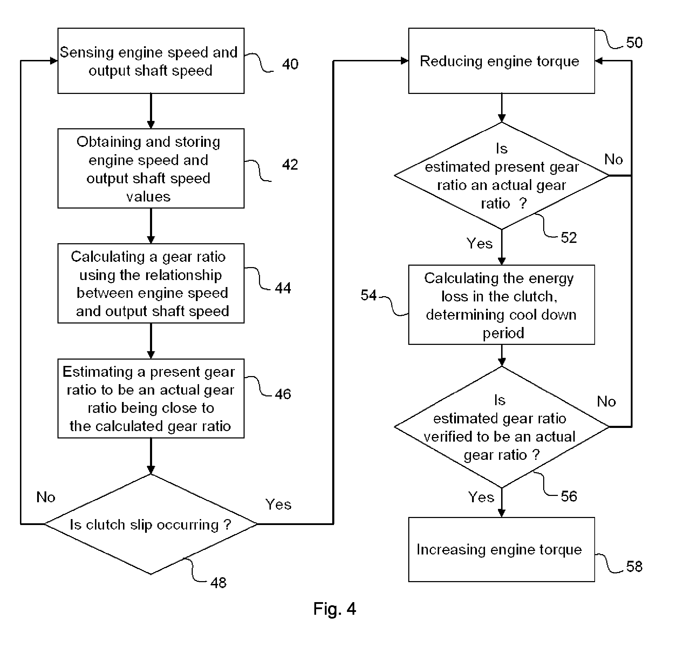

Hereinafter, one embodiment of the method according to the invention will be described with reference to Fig. 4. First, at step 40, the present engine speed is sensed by means of engine speed sensor 10 and the present propeller shaft speed is sensed by means of speed sensor 4. Then, at step 42, signals from the speed sensor 4 are converted in the slip protection means 6 to values representing the output shaft's instantaneous angular speed and signals from the engine speed sensor 10 are converted in the engine control system 9 to instantaneous values thereof, the values are communicated to the slip protection means 6. These instantaneous values of the engine speed are communicated with the slip protection means 6 together with signals indicating the engine torque, which in one embodiment is based on the fuel quantity injected. The obtained values of the engine speed and the propeller shaft speed are stored in the intermediate memory 11 connected to the slip protection means 6. At step 44, the present relationship between the engine speed and the propeller shaft speed is calculated in the slip protection means 6 using the following equation:

$$G = \frac{n_{engine}}{n_{gearbox}}$$

where $n_{gearbox}$ is the speed of the propeller shaft and $n_{engine}$ is the engine speed. It should be noted that the obtaining of the speed values and the following calculation of the present gearbox ratio can be performed on a continuous basis. Subsequently, at step 46, based on this quota between the engine speed and the propeller shaft speed, a gear ratio value of the various possible gear combinations of the gear box 3 stored in the memory 12 being closest to the calculated quota is collected from the memory 12. This collected gear box ratio is estimated to be the present gear box ratio G. In one embodiment, the gear ratio of the gear box 3 identified to be the next lower gear box ratio in relation to the calculated quota is set to G, i.e. the present gear box ratio.

Then, at step 48, the occurrence or non occurrence of clutch slip is determined by means the following equation:

$$\Delta n = n_{engine} - n_{gearbox}{}^{*}G \qquad\qquad (eqt.\ 3)$$

where G is the present actual gearbox ratio as mentioned above. According to one embodiment, non-occurrence of clutch slip is established if $\Delta n$ is within a range +/- d, where d is a predetermined number, and if $\Delta n$ is not within the range, occurrence of clutch slip is established. In one embodiment, d is within a range of 50 rpm - 150 rpm.

Thus, if clutch slip is not established the algorithm returns to step 40, otherwise the algorithm proceeds to step 50, where the present engine torque is collected from the engine control system 9, the engine torque value is stored as the initial engine torque, for example, in storing means 11, and the present engine torque is reduced in accordance with the following equation:

$$M_{max} = M_E - K\Delta n \qquad\qquad (eqt.\ 4)$$

where $M_{max}$ is the maximum allowed engine torque, $M_E$ is the value corresponding to the present engine torque, K is a predetermined reduction factor, and An is the calculated clutch slip from equation 3. According to one embodiment, K is set to a value in the range of 1-3. At the establishment of clutch slip, the measuring means 14 initiates a time measuring sequence in order to measure the length of the clutch slip period, i.e. the duration of the clutch slip. This duration is stored in storing means 11 for later in use when calculating the energy loss in the clutch caused by the clutch slip.

Furthermore, the values corresponding to the engine speed and the propeller shaft speed are obtained substantially continuously during the duration of the clutch slip by the clutch slip protection means 6 via the engine speed sensor 10 and the output shaft speed sensor 4 and the values representing the obtained speeds in each sensing moment are stored, for example, in storing means 11. The difference between the engine speed and the propeller shaft speed during the duration is also calculated in each moment and stored. Alternatively, the calculation of the difference in each sensing moment can be performed when the clutch slip has ceased. The value corresponding to the engine torque is also obtained substantially continuously during the duration of the clutch slip by the clutch slip protection means 6 via the engine control system 9 and the values representing the engine torque at each sensing moment are stored, for example, in storing means 11.

Thereafter, at step 52, it is checked whether the estimated present gearbox ratio corresponds to an actual gear ratio of the gearbox 3. To this end, the reduced engine torque is maintained during a period of time, $t_1$, having a predetermined length. In one embodiment, $t_1$ is a period of time in the range of 0-1.5 seconds. If $\Delta n$ is within the preset range mentioned above during $t_1$, i.e. the clutch slip is assumed to has stopped, the estimated gear ratio is determined to be an actual gear ratio. If $\Delta n$ is not within the range during $t_1$, i.e. the clutch slip still exists, the algorithm returns to step 50, where a new engine reduction is calculated in accordance with equation 3 using the present $\Delta n$. If the clutch slip is assumed to have stopped, i.e. $\Delta n$ is within the range during $t_1$, the measuring means 14 stops the time measuring sequence, and the length of the time period the clutch slip lasted is stored in storing means 11. Thereafter, at step 54, the energy loss is calculated in order to determine the period of time the further reduction of the engine torque should be maintained. Consequently, the length of the cool down period is based on the energy loss in the clutch or, in other words, the temperature rise caused by the clutch slip. In order to allow the clutch to cool down sufficiently, the length of the cool down period should be proportional to the energy loss, i.e. the higher the temperature rise is the longer the cool down period should be. In one embodiment, the energy loss, or in fact, a value corresponding to the energy loss is calculated in accordance with, for example, equation 1.

Then, the algorithm proceeds to step 56, where it is checked whether the gear ratio being assumed to be an actual gear ratio is qualified, i.e. whether the gear ratio being identified as an actual gear ratio in fact is an actual gear ratio. This is due to the fact that, even if the estimated present gear ratio is determined to be an actual gear ratio in step 52, the estimated gear ratio may be a fixed clutch slip corresponding to an actual gear ratio. This check is performed by means of a further reduction of the engine torque, which reduced engine torque is maintained during the cool down period determined above in step 52, where the cool down period is denoted $t_2$. This reduction of the engine torque is small, for example approximately 10-40 Nm. If the gear ratio is maintained substantially during $t_2$, the identified gear ratio is verified to be an actual gear ratio, the clutch slip has, accordingly, ceased, and the algorithm proceeds to step 58 where the engine torque can be increased again since the clutch linings now have cooled down.

However, if no in step 56, i.e. the gear ratio is not maintained during the period $t_2$, the algorithm returns to step 50. Thus, in step 58, the engine torque is increased to the initial engine torque. According to one embodiment of the invention, the engine torque is ramped up with a predetermined rate per second during a period of time $t_3$, which in one embodiment is approximately 10 seconds. In another embodiment, the engine torque is stepped up to the initial engine torque during the period of time $t_3$.

It should be noted that, as the skilled man realizes, other procedures for detecting or establishing clutch slip than the procedure described above can be used in of the invention. For example, the clutch slip can be detected by means of the method for detecting clutch slip described in WO 01772546 A1.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the invention. Those of ordinary skill in the art will readily appreciate that the invention could be implemented in a wide variety of embodiments, comprising hardware and software implementations, or combinations thereof. This application is intended to cover any adaptations or variations of the embodiments discussed herein. Consequently, the invention is defined by the wordings of the appended claims and equivalents thereof.

## Claims

1. A method for clutch slip protection in a vehicle driven by motor (1), said clutch (2) being arranged in a torque transmission path of said motor (1) between said motor (1) and a gear box (3), wherein said vehicle further comprises output adjustment means (9) arranged to adjust the output power of said motor (1), comprising the steps of: detecting (30, 48) the occurrence of clutch slip of said clutch; if the occurrence of clutch slip is detected, reducing (32, 50) the present engine torque to obtain cessation of said clutch slip; calculating (34, 54) a value corresponding to the energy loss in the clutch caused by said clutch slip; and maintaining (36, 56) said reduced engine torque during a cool down period, wherein the length of said cool down period is based on said value corresponding to the energy loss, thereby allowing the linings of said clutch to cool down.

2. The method according to claim 1, wherein the step of calculating (32, 54) comprises the steps of: measuring (54) the duration of said clutch slip; and calculating (54) the value corresponding the energy loss on basis of said duration.

3. The method according to claim 2, wherein the step of calculating (32, 54) comprises the steps of: obtaining (42) a value corresponding to the engine speed substantially continuously during said duration; obtaining (42) a value corresponding to the propeller shaft speed substantially continuously during said duration; calculating (54) the difference between the value corresponding to the engine speed and the value corresponding to the propeller shaft speed substantially continuously during said duration; summing (54) said difference over said duration; and calculating (54) the value corresponding to the energy loss on basis of said summation.

4. The method according to claim 3, wherein the step of calculating comprises the steps of: obtaining (50) the value corresponding to the engine torque substantially continuously during said duration.

5. The method according to claim 4, wherein the value corresponding to the energy loss is calculated according to

$$E = \int_{t_{start}}^{t_{stop}} M(n_{engine} - n_{gearbox}) dt \ ,$$

where E is the value corresponding to the energy loss, $t_{start}$ is the time point where the clutch slip was detected, $t_{stop}$ is the time point where the clutch slip ceased, M is a value corresponding to the engine torque, $n_{engine}$ is the value corresponding to the engine speed, and $n_{gearbox}$ is the value corresponding to the propeller shaft speed.

**6.** The method according to any one of preceding claims, wherein the step of detecting comprises the steps of: estimating (46) a gear ratio value of said gear box; and establishing (48) the occurrence of clutch slip utilizing said estimated gear ratio value.

**7.** The method according to claim 6, wherein the step of estimating a gear ratio comprises the step of substantially continuously calculating (44) the present relationship between the value corresponding to the engine speed and the value corresponding to the propeller shaft speed.

**8.** The method according to claim 7, wherein the step of calculating comprises the steps of: obtaining (42) the value corresponding to the engine speed of the vehicle; obtaining (42) the value corresponding to the propeller shaft speed; determining (44) the quota between the value corresponding to the engine speed and the value corresponding to the propeller shaft speed as a gear ratio value; and storing (44) said gear ratio value.

**9.** The method according to claims 6-8, wherein the step of estimating further comprises the steps of: selecting (46) a pre-stored gear ratio value representing an actual gear ratio value of said vehicle; comparing (52) said calculated gear ratio value with said selected gear ratio value during a first period of time; and if said calculated gear ratio value is substantially equal to said selected gear ratio value during said first period of time, determining (52) said selected gear ratio value to be the present gear ratio value.

**10.** The method according to claims 6-9, wherein the step of detecting comprises the step of establishing the occurrence of clutch slip if $\Delta n > d$, where $\Delta n = |n_{engine} - n_{gearbox}*G|$, where $\Delta n$ is the clutch slip, $n_{engine}$ is the value corresponding to the engine speed, $n_{gearbox}$ is the value corresponding to the propeller shaft speed, d is a predetermined number, and G is said determined present gear ratio value.

**11.** The method according to claim 10, further comprising the step of: if the occurrence of clutch slip is established (32, 48), obtaining (50) a value corresponding to the engine torque level; and storing (50) said value corresponding to the engine torque level as an initial engine torque level.

**12.** The method according to claims 6-11, wherein the step of reducing comprises the steps of: reducing (50) the present engine torque level to a first lower engine torque level, wherein said first lower engine torque level is based on said estimated gear ratio value; and maintaining (52) a first lower engine torque during a first period of time.

**13.** The method according to claims 6-12, further comprising the step of:

establishing (48) whether a clutch slip has ceased utilizing said estimated gear ratio value.

**14.** The method according to claim 13, wherein the step of establishing whether said clutch slip has ceased comprises the steps of: if it said selected gear ratio value is determined to be the present gear ratio, reducing said engine torque to a second lower engine torque level; and maintaining (36, 56) the actual engine torque at said at least second lower level during said cool down period.

**15.** The method according to claim 13 or 14, further comprising the step of: if it is established that said clutch slip has ceased, successively increasing (58) the actual engine torque level to said initial engine torque level.

**16.** The method according to claims 6-15, further comprising the step of calculating said lower engine torque levels according to $M_{max} = M_E - K\Delta n$, where $M_{max}$ is the maximum allowed engine torque, $M_E$ is a value corresponding to the present engine torque, K is a predetermined reduction factor, and Δn is the calculated clutch slip.

17. A system for clutch slip protection in a vehicle driven by a motor (1), said clutch (2) being arranged in a torque transmission path of said motor (1) between said motor (1) and a gear box (3), wherein said vehicle further includes an output adjustment means (9) arranged to adjust the output power of said motor (1), **characterised in that** said system comprises clutch slip protection means (6) including processing means (20) arranged to: detect the occurrence of clutch slip of said clutch; if the occurrence of clutch slip is detected, reduce the present engine torque to obtain cessation of said clutch slip; calculate a value corresponding to the energy loss in the clutch caused by said clutch slip; determine a cool down period based on the value corresponding to the energy loss in said clutch caused by said clutch slip; send a control instruction to said output adjustment means (9) to reduce the present engine torque to obtain cessation of said clutch slip and to maintain said reduced engine torque during a cool down period, wherein the length of said cool down period is based on said value corresponding to the energy loss.

18. The system according to claim 17, wherein said clutch slip protection means (6) comprises measuring means arranged to measure the duration of said clutch slip, and wherein said processing means (20) is arranged to calculate the value corresponding to the energy loss on basis of said duration.

19. The system according to claim 17 or 18, wherein said vehicle comprises engine speed sensing means (10) arranged to sense the engine speed of the vehicle; and output shaft speed sensing means (4) arranged to sense the propeller shaft speed, said sensing means (4, 10) being arranged to communicate with said clutch slip protection means (6), wherein said clutch slip protection means (6) is arranged to obtain the value corresponding to the engine speed substantially continuously during said duration; obtain the value corresponding to the propeller shaft speed substantially continuously during said duration; and wherein said processing means (20) is arranged to calculate the difference between the value corresponding to the engine speed and the value corresponding to the propeller shaft speed substantially continuously during said duration; sum said difference over said duration; and calculate the value corresponding to the energy loss on basis of said summation.

20. The system according to claims 17-19, wherein said vehicle further comprises sensing means arranged to substantially constantly sensing a value corresponding to the present engine torque level, and wherein said slip protection means (6) is arranged to obtain the value corresponding to the engine torque substantially continuously during said duration.

21. The system according to claim 20, wherein the value corresponding to energy loss is calculated according to

$$E = \int_{t_{start}}^{t_{stop}} M\left(n_{engine} - n_{gearbox}\right) dt \;,$$

where E is a value corresponding to the energy loss, $t_{start}$ is the time point where the clutch slip was detected, $t_{stop}$ is the time point where the clutch slip ceased, M is a value corresponding to the engine torque, $n_{engine}$ is the value corresponding to the engine speed, and $n_{gearbox}$ is the value corresponding to the propeller shaft speed.

22. The system according to any one of preceding claims 17-21, wherein said clutch slip protection means (6) is arranged to substantially continuously calculate the present relationship between the value corresponding to the engine speed and the value corresponding to the propeller shaft speed.

23. The system according to claim 22, wherein said vehicle comprises engine speed sensing means (10) arranged to sense the engine speed of the vehicle; and output shaft speed sensing means (4) arranged to sense the propeller shaft speed, said sensing means (4, 10) being arranged to communicate with said clutch slip protection means (6), wherein said clutch slip protection means (6) is arranged to obtain the value corresponding to the engine speed of the vehicle; obtain the value corresponding to the propeller shaft speed; determine the quota between the value corresponding to the engine speed and the value corresponding to the propeller speed as a gear ratio value; and wherein said clutch slip protection means (6) comprises storing means (12) arranged to store said gear ratio value.

**24.** The system according to claim 23, wherein said clutch slip protection means (6) is arranged to select a pre-stored gear ratio value representing an actual gear ratio value of said vehicle; compare said calculated gear ratio value with said selected gear ratio value during a first period of time; and, if said calculated gear ratio value is substantially equal to said selected gear ratio value during said first period of time, determine said selected gear ratio value to be the present gear ratio value.

**25.** The system according to claims 22-24, wherein the occurrence or non occurrence of clutch slip is established if $\Delta n$ > d, where $\Delta n = |n_{engine} - n_{gearbox}*G|$, where $\Delta n$ is the clutch slip, $n_{engine}$ is the value corresponding to the engine speed, $n_{gearbox}$ is the value corresponding to the propeller shaft speed, d is a predetermined number, and G is said determined present gear ratio value.

**26.** The system according to any one of preceding claims 22-25, wherein said vehicle further comprises sensing means arranged to substantially constantly sense a value corresponding to the present engine torque level, said system further comprising storing means (11) arranged to store the sensed value corresponding to the present engine torque level as an initial engine torque level, wherein said clutch slip protection means (6) is arranged to obtain the present engine torque level.

**27.** The system according to any one of preceding claims 22-26, wherein said clutch slip protection means (6) is arranged to send a control instruction to said output adjustment means (9) to control the present engine torque to reduce the present engine torque level to a first lower engine torque level, wherein said first lower engine torque level is based on said estimated gear ratio value; and maintain said first lower engine torque during a first period of time.

**28.** The system according to any one of preceding claims 22-27, wherein said clutch slip protection means (6) is arranged to establish whether a clutch slip has ceased utilizing said estimated gear ratio value.

**29.** The system according to any one of preceding claims 22-28, wherein said clutch slip protection means (6) is arranged to send a control instruction to said output adjustment means (9) to control the present engine torque to: if said selected gear ratio value is determined to be the present gear ratio, reduce said engine torque to a second lower engine torque level; and maintain the actual engine torque at said at least second lower level during a second predetermined period of time.

**30.** The system according to any one of preceding claims 22-29, wherein said clutch slip protection means (6) is arranged to send a control instruction to said output adjustment means (9) to control the present engine torque to: if it is established that said clutch slip has ceased, successively increase the actual engine torque level to said initial engine torque level.

**31.** The system according to claim 30, wherein said clutch slip protection means (6) is arranged to send a control instruction to said output adjustment means (9) to control the present engine torque to: if it is not established that said clutch slip has ceased, reduce the present engine torque level to at least one second lower engine torque level, wherein said second lower engine torque level is based on said estimated gear ratio value; and maintain said second engine torque level during a period of time substantially equal to a first period of time.

**32.** The system according to claim 30 or 31, wherein said clutch slip protection means (6) is arranged to send a control instruction to said output adjustment means (9) to control the present engine torque to increase said engine torque by ramping up said actual engine torque level to said stored initial engine torque level during a second period of time.

**33.** The system according to any one of preceding claims 22-32, wherein said lower engine torque levels are calculated according to $M_{max} = M_E - K\Delta n$, where $M_{max}$ is the maximum allowed engine torque, $M_E$ is the value corresponding to the present engine torque, K is a predetermined reduction factor, and $\Delta n$ is the calculated clutch slip.

**34.** A computer program (24) for an electronic control unit (6, 9) of a vehicle for clutch slip protection **characterized in that** said program (24) comprises program instructions, which when run on the electronic control unit (6, 9), causes the electronic control unit (6, 9) to cause the steps of anyone of claims 1-16.

**35.** A computer program product comprising computer readable medium (21) and a computer program (24) according to claim 34, wherein said computer program (24) is stored on said computer readable medium (21).

**36.** An electronic control unit (6, 9) of a vehicle, **characterised in that** a storage means (21) of said control unit comprises a computer program (24) according to claim 34.

Fig. 1

Fig. 2

```
                    ┌─────────────────────────────┐
                    ▼                             │
              ╱─────────────────╲                 │
            ╱   Is occurrence of  ╲      No        │
           ⟨     clutch slip       ⟩───────────────┘
            ╲    detected?        ╱
              ╲─────────────────╱  └─ 30
                     │
                    Yes
                     │
                     ▼
           ┌─────────────────────┐
           │ Reduce engine torque│  ∿ 32
           └─────────────────────┘
                     │
                     ▼
           ┌─────────────────────┐
           │ Calculate energy    │
           │ loss in clutch      │  ∿ 34
           └─────────────────────┘
                     │
                     ▼
           ┌─────────────────────┐
           │ Maintaining reduced │
           │ enginetorque during │  ∿ 36
           │ cool down period    │
           └─────────────────────┘
```

Fig. 3

Sensing engine speed and output shaft speed — 40

Obtaining and storing engine speed and output shaft speed values — 42

Calculating a gear ratio using the relationship between engine speed and output shaft speed — 44

Estimating a present gear ratio to be an actual gear ratio being close to the calculated gear ratio — 46

No ─ Is clutch slip occurring ? ─ Yes — 48

Reducing engine torque — 50

Is estimated present gear ratio an actual gear ratio ? — No / Yes — 52

Calculating the energy loss in the clutch, determining cool down period — 54

Is estimated gear ratio verified to be an actual gear ratio ? — No / Yes — 56

Increasing engine torque — 58

Fig. 4

**European Patent Office**

**EUROPEAN SEARCH REPORT**

Application Number

EP 05 10 2762

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2004/061603 A1 (MACK WILLIAM J) 1 April 2004 (2004-04-01) | 1-5, 17-22, 34-36 | F16D48/00 |
| A | * paragraphs [0013] - [0021] * <br> * paragraphs [0025], [0026] * <br> * figures 1,2 * <br> ----- | 12,14 | |
| A | US 2005/049112 A1 (MURAKAMI KENICHIRO ET AL) 3 March 2005 (2005-03-03) <br> * abstract * <br> * paragraphs [0034], [0035] * <br> ----- | 6-10,13, 14,22-25 | |
| D,A | US 6 033 342 A (STEINEL ET AL) 7 March 2000 (2000-03-07) <br> * abstract * <br> * figure 3 * <br> ----- | 1,15,26, 30 | |
| | | | **TECHNICAL FIELDS SEARCHED** (Int.Cl.7) |
| | | | F02D <br> F16D |

The present search report has been drawn up for all claims

| Place of search | Date of completion of the search | Examiner |
|---|---|---|
| The Hague | 22 August 2005 | J. Giráldez Sánchez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 05 10 2762

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2005

| Patent document cited in search report | | Publication date | Patent family member(s) | | Publication date |
|---|---|---|---|---|---|
| US 2004061603 | A1 | 01-04-2004 | AU | 2003263541 A1 | 23-04-2004 |
| | | | BR | 0314508 A | 26-07-2005 |
| | | | EP | 1546570 A1 | 29-06-2005 |
| | | | WO | 2004031604 A1 | 15-04-2004 |
| US 2005049112 | A1 | 03-03-2005 | JP | 2005076593 A | 24-03-2005 |
| | | | FR | 2859263 A1 | 04-03-2005 |
| US 6033342 | A | 07-03-2000 | DE | 19806497 A1 | 26-08-1999 |
| | | | BR | 9804745 A | 22-04-2003 |
| | | | ES | 2156068 A1 | 01-06-2001 |
| | | | FR | 2774954 A1 | 20-08-1999 |
| | | | GB | 2338529 A ,B | 22-12-1999 |
| | | | JP | 3129708 B2 | 31-01-2001 |
| | | | JP | 11314540 A | 16-11-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6033342 A

- WO 01772546 A1